# EUROPÄISCHE PATENTSCHRIFT

(11) **EP 1 702 712 B1**
(45) Veröffentlichungstag und Bekanntmachung des Hinweises auf die Patenterteilung: **18.11.2009**
(21) Anmeldenummer: 06111228.0
(22) Anmeldetag: 16.03.2006
(51) Int. Cl.: B23Q 1/00, B25B 5/06

(54) **Spannvorrichtung**
Clamping device
Dispositif de serrage

(30) Priorität: 18.03.2005 DE 102005013112
(43) Veröffentlichungstag der Anmeldung: 20.09.2006
(73) Patentinhaber: Ludwig Ehrhardt GmbH, 35321 Laubach (DE)
(72) Erfinder: Richter, Klaus, 35321, Laubach (DE); Graulich, Oliver, 35321, Laubach (DE)
(74) Vertreter: von Ahsen, Erwin-Detlef

(56) Entgegenhaltungen:
- DE-A1- 4 020 981
- DE-U1- 20 102 698
- DE-U1- 29 500 115
- SE-B- 445 312

## Beschreibung

Die Erfindung betrifft eine Spannvorrichtung zum Spannen von Werkzeugen, Werkstücken oder Vorrichtungen gemäß dem Oberbegriff des Patentanspruchs 1.

Eine solche Spannvorrichtung ist aus der DE 295 00 115 bekannt.

Im Allgemeinen wird eine Spannvorrichtung zum Spannen von Werkzeugen, Werkstücken oder Vorrichtungen mit einem Spannmittel, welches eine Spannbewegung und eine Niederzugbewegung ausführt, in der Praxis auch als Niederzugspannvorrichtung oder Bohrungsspannvorrichtung bezeichnet und dient in aller Regel nur zum Spannen von Werkstücken während ihrer Bearbeitung. Zum Spannen wird das Werkstück mit einer im Werkstück vorhandenen Bohrung auf einen Spannzapfen gesetzt, welcher zunächst gespreizt wird (Spannbewegung) und sich dadurch in der Bohrung verklemmt. Sodann wird der Spannzapfen leicht eingezogen (Niederzugbewegung), so daß das Werkstück plan auf einer freien Stirnfläche der Spannvorrichtung und gegebenenfalls durch diese lageorientiert aufliegt.

Bei der Vorrichtung nach der DE 40 20 981 C2 wird zunächst ein Spreizdorn gegen die Kraft einer Rückstellfeder hydraulisch eingezogen, wodurch die Spannbuchse gespreizt wird und sich in der Bohrung des Werkstücks verklemmt. Die Spannbuchse wird während dessen durch ein Tellerfederpaket gegen die Einzugbewegung des Spreizdorns gehalten, so daß sie nicht zusammen mit dem Spreizdorn eingezogen wird. Sobald sich die Spannbuchse vollständig in der Bohrung verklemmt hat, sich der Spreizdorn gegenüber der Spannbuchse also nicht weiter einziehen läßt, überwindet der auf den Spreizdorn ausgeübte Hydraulikdruck die Rückstellkraft des Tellerfederpaketes und die Spannbuchse wird eingezogen, bis das Werkstück plan auf der freien Stirnseite der Spannvorrichtung aufliegt.

Nachteilig bei dieser Vorrichtung ist, daß sowohl die Klemmkraft der Spannbuchse innerhalb der Bohrung des Werkstückes, als auch die Niederzugkraft vom aufgebrachten Hydraulikdruck abhängen. Dabei steigt mit der Niederzugkraft auch die Klemmkraft, was je nach Werkstückfestigkeit zu Beschädigungen am Werkstück führen kann.

Bei der Spannvorrichtung nach der DE 295 00 115 U1 wird zum Verankern eines Bauteiles zunächst eine erste Anschlusstülle von einem Druckmedium beaufschlagt, wodurch eine Bewegung eines Spanndornes entgegen der Federkraft eines Tellerfederpaketes und somit zu einer Losstellung einer Spannhülse führt. Eine Aufhebung der Druckbeaufschlagung führt zu einer durch das Tellerfederpaket ausgelösten Verankerung der Spannhülse. Durch Beaufschlagen eines dem Zylinder zugeordneten zweiten Anschlussstutzens mit einem Druckmedium wird eine Kammer unter Druck gesetzt. Ist der Einsatz beendet, so wird die Druckbeaufschlagung über den zweiten Anschlussstutzen eingestellt und ein mit einer Kammer verbundener dritter Anschlussstutzen druckbeaufschlagt, so dass der Zylinder zusammen mit der Last nach unten gefahren werden kann. Zum endgültigen Lösen des Bauteils von der Spannhülse muss zusätzlich die erste Anschlusstülle mit Druck beaufschlagt werden.

Hierbei ist von Nachteil, daß bei dieser Vorrichtung drei Anschlussstutzen mit Druckmitteln versorgt werden müssen. Zudem muss das Lösen des Bauteiles von der Spannvorrichtung über zwei Arbeitsschritte, nämlich dem Verfahren des Zylinders und der anschließenden Beaufschlagung des Spanndornes mit einem Druckmedium, erfolgen.

Hiervon ausgehend liegt der Erfindung das Problem zugrunde, Nachteile der bekannten Spannvorrichtung an zu beseitigen.

Die Lösung dieses Problems erfolgt durch eine Spannvorrichtung gemäß Anspruch 1.

Durch die gesonderten Betätigungsorgane einerseits für die Spannbewegung und andererseits für die Niederzugbewegung läßt sich die Spannkraft unabhängig von der Niederzugkraft und umgekehrt einstellen. Dabei dient als Betätigungsorgan für die Spannbewegung eine Druckfeder, während als Betätigungsorgan für die Niederzugbewegung ein Druckmittelzylinder dient. Die Spannkraft ergibt sich dabei aus der Federkraft, während die Niederzugkraft mittels des Drucks frei einstellbar ist.

Die Erfindung wird nachfolgend anhand eines in der Zeichnung dargestellten Ausführungsbeispiels näher erläutert. Es zeigt:

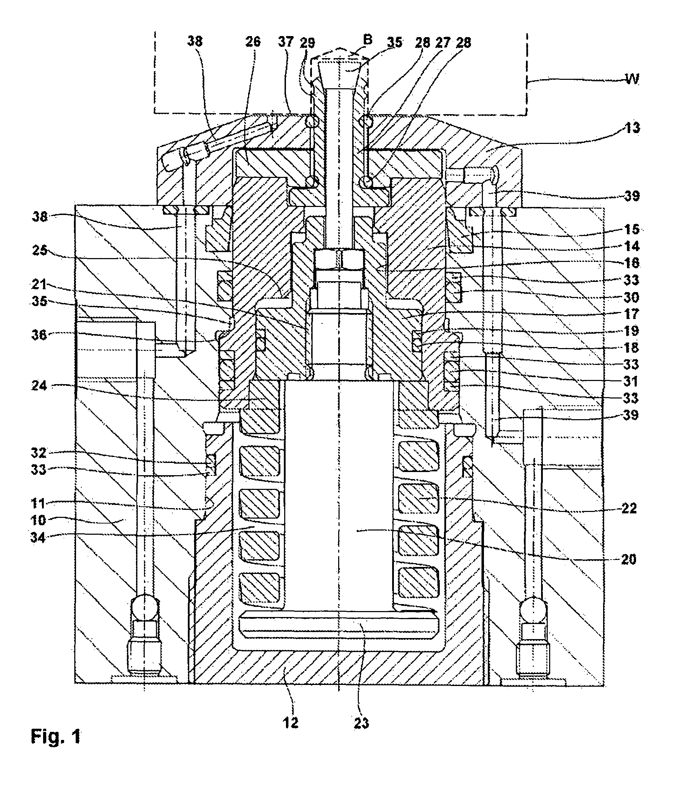

Fig. 1 eine Spannvorrichtung mit den Erfindungsmerkmalen im Längsschnitt.

Die Spannvorrichtung weist ein Gehäuse 10 auf, welches mit einer abgestuften Durchgangsbohrung 11 versehen ist. Die Durchgangsbohrung 11 ist nach unten durch einen Einschraubdeckel 12 verschlossen. Ein weiterer Deckel 13 schließt die Durchgangsbohrung 11 auf der dem Einschraubdeckel 12 gegenüberliegenden Oberseite ab.

Im oberen, dem Deckel 13 zugewandten Teil der Durchgangsbohrung 11 ist ein Niederzugkolben 14 axial verschieblich geführt. Ein Abstreifer 15 sorgt dafür, daß kein Schmutz oder dergleichen in die Durchgangsbohrung 11 eindringen kann.

Der Niederzugkolben 14 ist seinerseits mit einer abgestuften Durchgangsbohrung 16 versehen, in welcher eine Buchse 17 axial verschieblich geführt ist. Die Buchse 17 ist mit einem O-Ring 18 und Stützring 19 gegenüber der Durchgangsbohrung 16 an ihrem größten Durchmesser gedichtet. In die Buchse 17 ist ein Spannkolben 20 eingeschraubt (Gewinde 21) und dadurch mit diesem zusammen im Gehäuse 10 axial verschieblich. Dabei ist der Spannkolben 20 durch eine Druckfeder 22 in Richtung auf den Einschraubdeckel 12 vorgespannt. Die Druckfeder 22 stützt sich einerseits an einem Teller 23 des Spannkolbens 20 und andererseits an der Unterseite des Niederzugkolbens 14 bzw. einer in die Durchgangsbohrung 16 des Niederzugkolbens 14 eingesetzten Scheibe 24, welche sich wiederum am Niederzugkolben 14 abstützt, ab. Wie in Fig. 1 gut zu erkennen ist, definiert eine Schulter 25 in der Durchgangsbohrung 16 des Niederzugkolbens 14 einerseits und die Scheibe 24 andererseits das axiale Spiel, mit welchem der Spannkolben 20 gegenüber dem Niederzugkolben 14 axial verschieblich ist.

Auf die der Scheibe 24 gegenüberliegenden Stirnseite des Niederzugkolbens 14 ist ein Abschlußdeckel 26 angeordnet und mit dem Niederzugkolben 14 verbunden, vorzugsweise verschraubt. Zwischen dem Niederzugkolben 14 und dem Abschlußdeckel 26 ist eine Spannbuchse 27 derart eingespannt, daß sie gemeinsam mit dem Niederzugkolben 14 und dem Abschlußdeckel 26 im Gehäuse 10 axial verschoben wird. Die Spannbuchse 27 ist mit in Axialrichtung verlaufenden Schlitzen in zwei, drei oder mehr Segmente geteilt, welche durch O-Ringe 28 zusammengehalten und in Richtung auf die Längsmittelachse vorgespannt sind. An ihrem freien, aus dem Deckel 13 herausschauenden Ende ist die Spannbuchse 27 mit in Umfangsrichtung umlaufenden Spannpratzen 29 versehen, welche beim Spannen in eine Bohrung in einem Werkstück eingreifen und das Werkstück so halten.

Der Niederzugkolben 14 ist gegenüber dem Gehäuse 10 einerseits mit einem O-Ring 30 und im Bereich eines größeren Durchmessers mit einem O-Ring 31 gedichtet. Zum Dichten des Einschraubdeckels 12 gegenüber dem Gehäuse 10 dient ebenfalls ein O-Ring 32. Die O-Ringe 30, 31 und 32 können, wie in Fig. 1 gezeigt, durch Stützringe 33 unterstützt sein.

Um ein Werkstück W auf die Spannvorrichtung, konkret auf die Spannbuchse 27, aufsetzen oder abnehmen zu können, wird über eine geeignete, in Fig. 1 nicht näher gezeigte Druckmittelleitung Druckmittel, vorzugsweise Hydrauliköl, zwischen die O-Ringe 31 und 32 eingeleitet. Hierdurch füllt sich der gesamte Innenraum des Einschraubdeckels 12 mit Druckmittel und drückt den Niederzugkolben 14 in der Darstellung gemäß Fig. 1 nach oben in Richtung auf den Deckel 13. Da der Hydraulikdruck auch auf den Spannkolben 20 wirkt, wird auch dieser nach oben in Richtung auf den Deckel 13 gedrückt (Druckraum 34) und dabei die Druckfeder 22 komprimiert, bis die Buchse 17 an der Schulter 25 anliegt. Die Spannvorrichtung ist nun vollständig entspannt und ein Werkstück W kann abgenommen bzw. aufgesetzt werden.

Soll nun ein auf die Spannvorrichtung aufgesetztes Werkstück W gespannt werden, wird das Hydrauliköl zunächst aus dem Druckraum 34 abgelassen. Hierdurch wird der Spannkolben 20 durch die Druckfeder 22 in der Darstellung gemäß Fig. 1 nach unten in Richtung auf den Einschraubdeckel 12 gedrückt. Aufgrund eines Kegelstumpfes 35 am oberen, dem Teller 23 gegenüberliegenden Ende des Spannkolbens 20, welcher mit sich in Richtung auf den Teller 23 verjüngender Keilschräge ausgebildet ist, wird nun die Spannbuchse 27 gegen die Kraft der O-Ringe 28 nach außen gedrückt und die Spannpratzen 29 greifen in die am Werkstück W vorgesehene Bohrung B ein und klemmen dieses dadurch. Nun wird Druckmittel in einen Druckraum 35 zwischen den O-Ringen 30 und 31 eingeleitet.

Der Druck im Druckraum 35 wirkt auf eine Schulter 36 am Niederzugkolben 14 und drückt diesen dadurch nach unten in Richtung auf die Scheibe 24. Hierdurch wird die Spannbuchse 27 mit eingezogen und dadurch das gespannte Werkstück W auf eine ebene Planscheibe 37 an der Oberseite des Deckels 13 niedergezogen. Dabei wird auch der Spannkolben 20 aufgrund der sich an der Unterseite des Niederzugkolbens 14 bzw. der Scheibe 24 abstützenden Druckfeder 22 mitgenommen, so daß die Spannbuchse 27 in der Bohrung B des Werkstücks W gespannt bleibt.

Zur Planscheibe 37 führt ein Druckluftkanal 38 für eine ebenfalls an sich bekannte Auflagekontrolle. Des weiteren ist ein Druckluftkanal 39 in den Deckel 13 geführt. Durch diesen Druckluftkanal 39 wird Druckluft in den Deckel 13 eingeleitet, welche durch die Bohrung für die Spannbuchse 27 im Deckel 13 und die Schlitze in der Spannbuchse 27 wieder ausströmt und so als Sperrluft gegen das Eindringen von Spänen und anderen Verschmutzungen dient.

### Bezugszeichenliste:

- 10: Gehäuse
- 11: Durchgangsbohrung
- 12: Einschraubdeckel
- 13: Deckel
- 14: Niederzugkolben
- 15: Abstreifer
- 16: Durchgangsbohrung
- 17: Buchse
- 18: O-Ring
- 19: Stützring
- 20: Spannkolben
- 21: Gewinde
- 22: Druckfeder
- 23: Teller
- 24: Scheibe
- 25: Schulter
- 26: Abschlußdeckel
- 27: Spannbuchse
- 28: O-Ring
- 29: Spannpratzen
- 30: O-Ring
- 31: O-Ring
- 32: O-Ring
- 33: Stützring
- 34: Druckraum
- 35: Druckraum
- 36: Schulter
- 37: Planscheibe
- 38: Druckluftkanal (Auflagekontrolle)
- 39: Druckluftkanal (Sperrluft)

- W: Werkstück
- B: Bohrung

## Patentansprüche

1. Spannvorrichtung zum Spannen von Werkzeugen, Werkstücken (W) oder Vorrichtungen mit einem Spannmittel (27), welches eine Spannbewegung und eine Niederzugbewegung ausführt und mit gesonderten Betätigungsorganen, nämlich einem Niederzugkolben (14) für die Niederzugbewegung und eine auf einen Spannkolben (20) wirkende Druckfeder (22) für die Spannbewegung, wobei der Niederzugkolben (14) axial verschieblich in einer verschlossenen Durchgangsbohrung (11) eines Gehäuses (10) geführt ist, der Niederzugskolben (14) seinerseits eine Durchgangsbohrung (16) aufweist, **dadurch gekennzeichnet, daß** in der Durchgangsbohrung (16) eine Buchse (17) angeordnet ist, der Spannkolben (20) in die Buchse (17) eingeschraubt ist und der Spannkolben (20) durch die sich gegenüber dem Niederzugkolben (14) abstützende Druckfeder (22) vorgespannt ist, und zum Entspannen des Werkstückes (W) der Niederzugkolben (14) und der Spannkolben (20) über einen einzigen gemeinsamen Druckraum (34) mit Druckmittel beaufschlagbar sind.

## Claims

1. Clamping device for clamping tools, work pieces (W) or devices with a clamping means (27), which implements a clamping movement and a pull-down movement, and with separate actuation organs, namely a pull-down piston (14) for the pull-down movement and a compression spring (22) acting on a clamping piston (20) for the clamping movement, wherein the pull-down piston (14) is axially displaceably guided in a closed through boring (11) of a housing (10), the pull-down piston (14) for its part possesses a through boring (16), **characterised in that** in the through boring (16) is arranged a nut (17), the clamping piston (20) is screwed into the nut (17) and the clamping piston (20) is pre-stressed by the compression spring (22) that supports itself opposite to the pull-down piston (14), and to unclamp the work piece (W), the pull-down piston (14) and the clamping piston (20) can be impinged with a pressurising medium over a single common pressure chamber (34).

## Revendications

1. Dispositif de serrage pour ancrage d'outils, pièces à usiner (W), ou dispositif de fixation, avec un moyen de serrage (27), lequel moyen permet un déplacement ainsi qu'un mouvement axial de déplacement vers le bas, et ce avec des organes spécifiques, tels un piston de retrait (14) pour le déplacement en partie inférieure vers le bas, où le piston de retrait(14) est mû axialement agissant sur un piston tenseur de blocage (20) pour obtenir un mouvement sous pression sachant que le piston de retrait (14) apte à un verrouillage axial est mû au travers d'un alésage verrouillé (11) d'un carter (10) ; par ailleurs le piston abaisseur (14)de son côté est muni d'un alésage traversant (16) **caractérisé en ce que** l'alésage traversant (16) est muni d'une douille (17), le piston tenseur (20) étant vissé dans la douille (17) et que le piston tenseur (20) étant sous pression face au piston de retrait (14), en butée sous l'effet de la pression du ressort (22), et que le déblocage de l'outil (W), le piston de retrait (14) et le piston tenseur (20) sont pressurisés par mise sous pression d'un moyen approprié dans une chambre de mise sous pression commune.
